(19) Europäisches Patentamt
European Patent Office
Office européen des brevets

(11) EP 4 714 991 A1

(12) **EUROPEAN PATENT APPLICATION**
published in accordance with Art. 153(4) EPC

(43) Date of publication:
**25.03.2026 Bulletin 2026/13**

(21) Application number: **24807255.5**

(22) Date of filing: **16.05.2024**

(51) International Patent Classification (IPC):
***C08G 18/44** (2006.01)* ***B32B 27/30** (2006.01)*
***B32B 27/36** (2006.01)* ***B32B 27/40** (2006.01)*
***C08G 18/18** (2006.01)* ***C08G 18/70** (2006.01)*
***C08G 64/04** (2006.01)* ***C09D 175/04** (2006.01)*

(52) Cooperative Patent Classification (CPC):
**B32B 27/30; B32B 27/36; B32B 27/40; C08G 18/18; C08G 18/44; C08G 18/70; C08G 64/04; C09D 175/04**

(86) International application number:
**PCT/JP2024/018107**

(87) International publication number:
**WO 2024/237305 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.05.2023 JP 2023081847**

(71) Applicant: **MITSUBISHI GAS CHEMICAL COMPANY, INC.**
**Chiyoda-ku**
**Tokyo 100-8324 (JP)**

(72) Inventor: **KIYOSUE, Syouya**
**Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**

(54) **RESIN COMPOSITION, RESIN SOLUTION, AND METHOD FOR PRODUCING CROSSLINKED COATING FILM**

(57) From the point of view of the necessity for coating films with superior adhesion to substrates, there is demand for the development of new resin compositions. The abovementioned problem is solved by the resin composition described below. Specifically, provided is a resin composition containing a polycarbonate resin, an active methylene-based block polyisocyanate, and an amine-based catalyst, wherein the polycarbonate resin includes a terminal structure (A) represented by general formula (1) and a constituent unit (B) derived from a monomer represented by general formula (2). $R_1$ to $R_7$, Z, a, X, Y, and * in formulas (1) and (2) are as described in the specification.

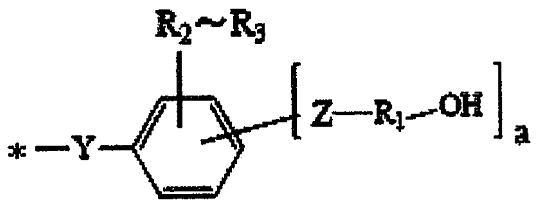

(1)

EP 4 714 991 A1

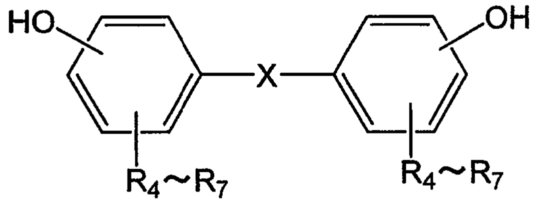

(2)

## Description

TECHNICAL FIELD

The present invention relates to a resin composition, a resin solution, etc. More specifically, the present invention relates to a resin composition that includes a polycarbonate resin and is capable of forming a crosslinked coating film excellent in adhesion to a predetermined base material, etc.

BACKGROUND ART

Polycarbonate resins have excellent transparency and formability as well as excellent mechanical properties such as impact resistance and thus are used in electrical products and mechanical products such as automobiles. Among them, polycarbonate resin solutions for obtaining functional thin films and for coating articles are known (Patent Document 1).

Coating films obtained from polycarbonate resin solutions are excellent in durability such as impact resistance but inferior in adhesion, and it is known that, by taking advantage of the characteristics, such coating films are applied to easily peelable nail polish (Patent Document 2). Accordingly, there is a room for improvement of the adhesion between these coating films and base materials.

As a resin composition obtained by blending a polycarbonate resin with another resin, for example, a blend resin composition of a polycarbonate resin and a polyphenylene ether resin is known (Patent Document 3), but even when such a blend resin composition is employed, the adhesion is not sufficiently improved. Therefore, there is still a demand for the development of a polycarbonate resin composition, etc. that can improve the adhesion between coating films and base materials.

PRIOR ART DOCUMENTS

PATENT DOCUMENTS

Patent Document 1: Japanese Laid-Open Patent Publication No. H04(1992)-268365
Patent Document 2: Japanese Laid-Open Patent Publication No. 2014-024789
Patent Document 3: Japanese Patent No. 6340811

SUMMARY OF THE INVENTION

PROBLEMS TO BE SOLVED BY THE INVENTION

From the viewpoint of the necessity for coating films excellent in adhesion to base materials, etc., it has been desired to develop a novel resin composition.

MEANS FOR SOLVING THE PROBLEMS

The present invention includes, for example, aspects described below.

[1] A resin composition including:

a polycarbonate resin;
an active methylene-based block polyisocyanate; and
an amine-based catalyst,
wherein the polycarbonate resin includes a terminal structure (A) represented by general formula (1) and a structural unit (B) derived from a monomer represented by general formula (2):

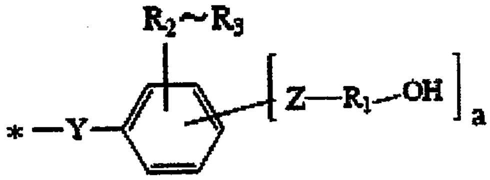

(1)

wherein in formula (1):

$R_1$ represents an alkylene group having 1 to 20 carbon atoms or an alkenylene group having 2 to 20 carbon atoms, each of which may have a substituent;
$R_2$ to $R_3$ each independently represent hydrogen, or an alkyl group having 1 to 20 carbon atoms, an alkoxy group having 1 to 10 carbon atoms, or an aryl group having 6 to 12 carbon atoms, each of which may have a substituent;
Z represents any one of an ether bond (-O-), a carbonyl group (-C(O)-) and an ester bond (-C(O)O-), or represents a single bond;
a represents an integer of 1 to 3;
Y represents an ether bond or an ester group; and
* represents a bonding site to a polymer main chain,

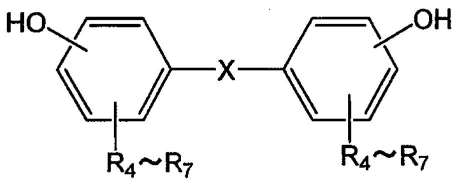

(2)

wherein in formula (2):

$R_4$ to $R_7$ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent; and
X is represented by any one of formulae (3) below:

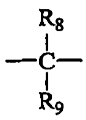 , $-S-$ , $-(CH_2)_c-$ , $-O-$ , $-SO-$ , $-CO-$ , $-SO_2-$ ,

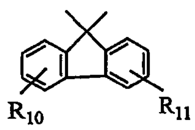 , 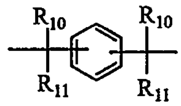 , 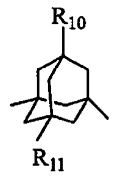 , 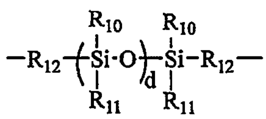

(3)

wherein in formulae (3):

$R_8$ and $R_9$ each independently represent hydrogen, fluorine, chlorine, bromine, or iodine, or an alkyl group having 1 to 20 carbon atoms, an alkoxy group having 1 to 5 carbon atoms, or an aryl group having 6 to 12 carbon atoms, each of which may have a substituent, or
$R_8$ and $R_9$ represent a group in which $R_8$ and $R_9$ bind to each other to form a carbocyclic ring having 5 to 20 carbon atoms or a heterocyclic ring having 5 to 12 chemical elements, each of which may have a substituent;
$R_{10}$ and $R_{11}$ each independently represent hydrogen, fluorine, chlorine, bromine, or iodine, or an alkyl group having 1 to 9 carbon atoms, an alkoxy group having 1 to 5 carbon atoms, an alkenyl group having 2 to 12 carbon atoms, or an aryl group having 6 to 12 carbon atoms, each of which may have a substituent;

each $R_{12}$ independently represents an alkylene group having 1 to 9 carbon atoms, which may have a substituent;
c represents an integer of 0 to 20; and
d represents an integer of 1 to 500.

[2] The resin composition according to item [1], wherein in general formula (1), Z is a single bond, $R_1$ is an alkylene group having 1 to 2 carbon atoms, and $R_2$ and $R_3$ are hydrogen.
[3] The resin composition according to item [1] or [2], wherein general formula (1) is represented by formula (1-1) below:

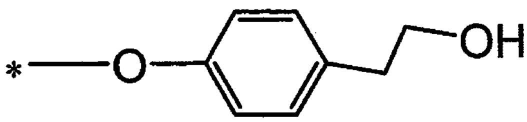

(1-1)

wherein in formula (1-1), * represents the bonding site.
[4] The resin composition according to any one of items [1] to [3], wherein the monomer represented by general formula (2) is at least one selected from the group consisting of formula (4) to formula (10) below:

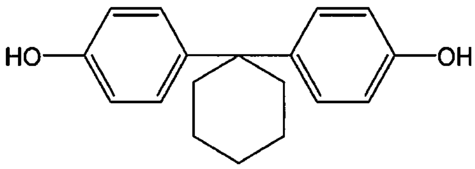

(4)

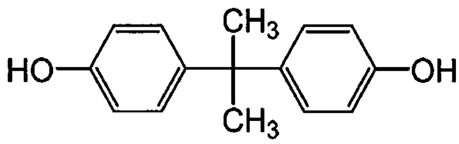

(8)

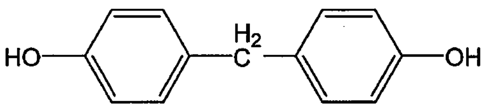

(5)

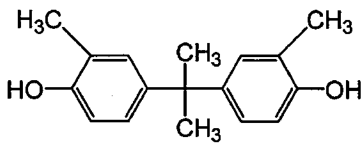

(9)

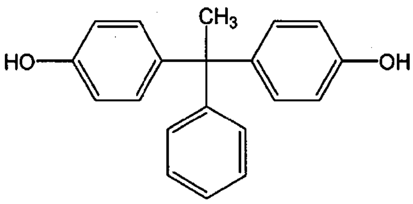

(6)

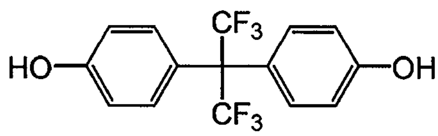

(10)

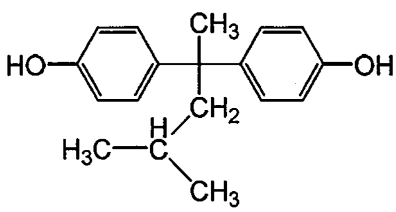

(7)

[5] The resin composition according to any one of items [1] to [4], wherein the polycarbonate resin further includes a structural unit (C) derived from a monomer represented by formula (11) below derived from a branching agent:

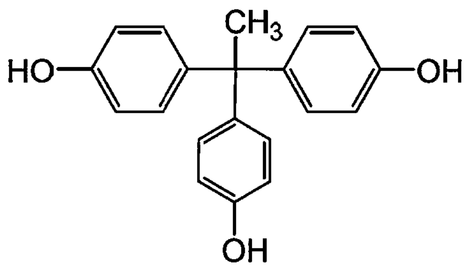

(11)

[6] The resin composition according to any one of items [1] to [5], wherein the polycarbonate resin has a hydroxyl value (OH value) of 0.5 to 10 mgKOH/g.
[7] The resin composition according to any one of items [1] to [6], wherein the isocyanate (NCO) content in the active methylene-based block polyisocyanate is 4.0 to 12.0% by mass.
[8] The resin composition according to any one of items [1] to [7], wherein the NCO/OH ratio (mol/mol) calculated from the isocyanate content in the active methylene-based block polyisocyanate and the hydroxyl value of the polycarbonate resin according to formula (I) below is 0.5 to 1.5:

$$\text{NCO/OH ratio (molar ratio)} = \text{NCO (mol)/OH (mol)} = (\text{active methylene-based block polyisocyanate [g]} \times \text{NCO content [\% by mass]}/100)/42\ \text{[g/mol]} \ / \ \text{OH value [mg-KOH/g]} \times \text{polycarbonate resin [g]}/56100\ \text{[mg/mol]} \quad \ldots\ldots \text{(I)}$$

[9] The resin composition according to any one of items [1] to [8], wherein the amine-based catalyst is a non-basic amine catalyst.
[10] The resin composition according to any one of items [1] to [9], wherein the amine-based catalyst has a triphenylamine structure.
[11] The resin composition according to any one of items [1] to [10], wherein the amine-based catalyst is at least one selected from the group consisting of formula (12) to formula (14) below:

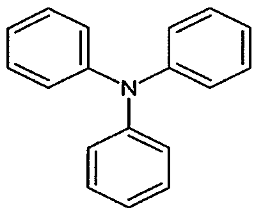

(12)

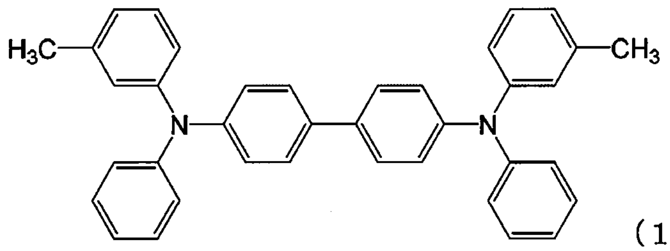

(13)

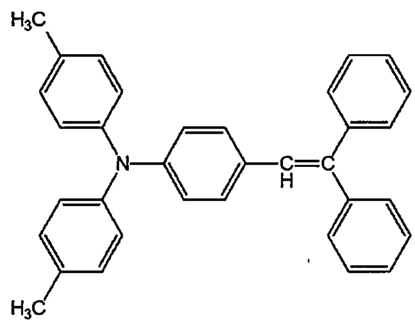

(14)

[12] The resin composition according to any one of items [1] to [11], which includes 0.05 to 0.5 parts by mass of the active methylene-based block polyisocyanate and 1 to 20 parts by mass of the amine-based catalyst relative to 10 parts by mass of the polycarbonate resin.
[13] The resin composition according to any one of items [1] to [12], which includes 10 to 95% by mass of the polycarbonate resin, 0.5 to 5.0% by mass of the active methylene-based block polyisocyanate, and 5.0 to 89.5% by mass of the amine-based catalyst based on the total mass of the resin composition.
[14] A resin solution including:

the resin composition according to any one of items [1] to [13]; and
at least one solvent selected from the group consisting of a halogen-based solvent, an ester-based solvent, an ether-based solvent, a carbonic acid ester-based solvent, and a ketone-based solvent.

[15] A method for producing a crosslinked coating film, wherein the solvent is removed from the resin solution according to item [14] and heating is performed at 50 to 150°C.
[16] The method according to item [15], wherein the crosslinked coating film is formed on a PVB (polybutyral resin) substrate or a PET (polyethylene terephthalate resin) substrate.

## ADVANTAGEOUS EFFECT OF THE INVENTION

According to the present invention, a resin composition capable of realizing a coating film having high adhesion to a predetermined base material, etc. are provided. The resin coating film obtained from the resin composition or the like of the present invention has characteristics of having stronger adhesion to a predetermined base material and being less likely to peel off when compared to conventional resin coating films.

## DESCRIPTION OF EMBODIMENTS

The present invention relates to a resin composition including a predetermined polycarbonate resin, an active methylene-based block polyisocyanate, and an amine-based catalyst, a resin solution including the resin composition, etc., a coating film obtained from the resin solution, a method for producing a crosslinked coating film, etc. Hereinafter, these objects of the present invention will be described.

### 1. Resin Composition

#### 1-1. Components of Resin Composition and Contents Thereof

As described above, the resin composition of the present invention includes a polycarbonate resin, an active methylene-based block polyisocyanate, and an amine-based catalyst. Preferably, the resin composition includes these components as a mixture.
Preferably, the resin composition includes 0.05 to 0.5 parts by mass of the active methylene-based block polyisocyanate and 1 to 20 parts by mass of the amine-based catalyst relative to 10 parts by mass of the polycarbonate resin.
Relative to 10 parts by mass of the polycarbonate resin in the resin composition, more preferably, 0.07 to 0.4 parts by mass of the active methylene-based block polyisocyanate is included, even more preferably, 0.10 to 0.35 parts by mass or 0.09 to 0.30 parts by mass of the active methylene-based block polyisocyanate is included, and particularly preferably, 0.10 to 0.30 parts by mass of the active methylene-based block polyisocyanate is included.
Further, relative to 10 parts by mass of the polycarbonate resin in the resin composition, more preferably, 1.5 to 18 parts by mass of the amine-based catalyst is included, even more preferably, 1.5 to 15 parts by mass or 2 to 16 parts by mass of the amine-based catalyst is included, and particularly preferably, 2.5 to 12 parts by mass or 3 to 10 parts by mass of the amine-based catalyst is included.
The resin composition includes, for example, 10 to 95% by mass of the polycarbonate resin, 0.5 to 5.0% by mass of the active methylene-based block polyisocyanate, and 5.0 to 89.5% by mass of the amine-based catalyst based on the total mass of the resin composition.
The resin composition preferably includes 30 to 90% by mass of the polycarbonate resin, more preferably includes 40 to 80% by mass of the polycarbonate resin, and even more preferably includes 50 to 76% by mass of the polycarbonate resin based on the total mass of the resin composition.
The resin composition includes, for example, 0.3 to 7.0% by mass or 0.4 to 6.0% by mass of the active methylene-based block polyisocyanate based on the total mass of the resin composition. The resin composition preferably includes 0.5 to 4.0% by mass of the active methylene-based block polyisocyanate, more preferably includes 0.5 to 3.0% by mass of the active methylene-based block polyisocyanate, and even more preferably includes 0.5 to 2.5% by mass of the active methylene-based block polyisocyanate based on the total mass of the resin composition.
The resin composition preferably includes 5.0 to 89.5% by mass of the amine-based catalyst, more preferably includes 10 to 70% by mass or 15 to 75% by mass of the amine-based catalyst, even more preferably includes 20 to 60% by mass or 20 to 65% by mass of the amine-based catalyst, and particularly preferably includes 22 to 55% by mass or 22 to 50% by mass of the amine-based catalyst based on the total mass of the resin composition.
In the resin composition, the total weight of the polycarbonate resin, the active methylene-based block polyisocyanate, and the amine-based catalyst is, for example, 50% by mass or more based on the total mass of the

resin composition. The total weight of the polycarbonate resin, the active methylene-based block polyisocyanate, and the amine-based catalyst in the resin composition is preferably 70% by mass or more or 80% or more, more preferably 90% by mass or more or 95% or more, and particularly preferably 97% by mass or more or 99% by mass or more based on the total mass of the resin composition. Further, in the resin composition, only the polycarbonate resin, the active methylene-based block polyisocyanate, and the amine-based catalyst may be substantially included.

1-2. Polycarbonate Resin

The polycarbonate resin includes a terminal structure (A) of general formula (1).

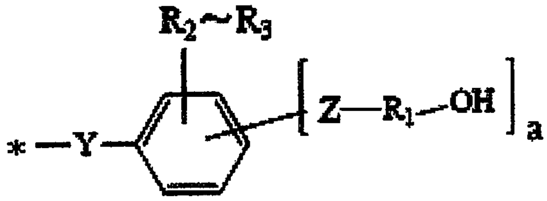

(1)

In general formula (1) representing the terminal structure (A), $R_1$ is an alkylene group having 1 to 20 carbon atoms or an alkenylene group having 2 to 20 carbon atoms, each of which may have a substituent. $R_1$ is preferably an alkylene group having 1 to 12 carbon atoms, more preferably an alkylene group having 1 to 6 carbon atoms, even more preferably an alkylene group having 1 to 4 carbon atoms, and particularly preferably an alkylene group having 1 to 2 carbon atoms.

In general formula (1), $R_2$ and $R_3$ are each independently hydrogen, an alkyl group having 1 to 20 carbon atoms which may have a substituent, an alkoxy group having 1 to 10 carbon atoms which may have a substituent, or an aryl group having 6 to 12 carbon atoms which may have a substituent. $R_2$ and $R_3$ are preferably hydrogen, an alkyl group having 1 to 6 carbon atoms, an alkoxy group having 1 to 4 carbon atoms, or an aryl group having 6 to 10 carbon atoms, more preferably hydrogen, an alkyl group having 1 to 3 carbon atoms, an alkoxy group having 1 to 3 carbon atoms, or an aryl group having 6 to 8 carbon atoms, and particularly preferably hydrogen, an alkyl group having 1 or 2 carbon atoms, an alkoxy group having 1 or 2 carbon atoms, or an aryl group having 6 or 7 carbon atoms.

In general formula (1), Z is any one of an ether bond (-O-), a carbonyl group (-C(O)-) and an ester bond (-C(O)O-), or a single bond, and is preferably a single bond.

In general formula (1), a is an integer of 1 to 3, preferably an integer of 1 or 2, and more preferably 1.

In general formula (1), Y represents an ether bond or an ester group (ester bond: *-C(O)O-), and is preferably an ether bond.

As described above, * in general formula (1) represents a bonding site to a polymer main chain in the polycarbonate resin.

Examples of preferred forms of the terminal structure (A) include a terminal structure, wherein in general formula (1), $R_1$ is an alkylene group having 1 or 2 carbon atoms, $R_2$ and $R_3$ are hydrogen, Y is an ether bond (-O-), Z is a single bond, and a is 1. Specific examples thereof include a terminal structure represented by formula (1-1).

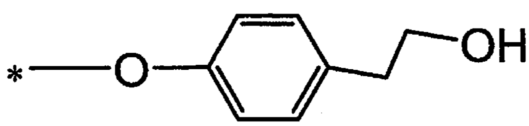

(1 − 1)

In the polycarbonate resin, the content of the structural unit of the terminal structure (A) is preferably 10% by mass or less or 8% by mass, more preferably 6% by mass or less or 4% by mass or less, and even more preferably 2% by mass or less based on the total weight of the polycarbonate resin. Further, in the polycarbonate resin, the content of the structural unit of the terminal structure (A) is preferably 0.3% by mass or more, more preferably 0.5% by mass or more, and even more preferably 1% by mass or more or 2% by mass or more based on the total weight of the polycarbonate resin.

The polycarbonate resin includes a structural unit (B) derived from a monomer of general formula (2).

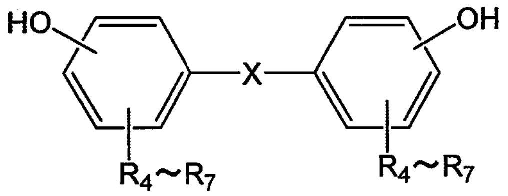

(2)

In formula (2), $R_4$ to $R_7$ are each independently hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent.

$R_4$ to $R_7$ are preferably hydrogen, an alkyl group having 1 to 12 carbon atoms, an aryl group having 6 to 10 carbon atoms, an alkenyl group having 2 to 8 carbon atoms, an alkoxy group having 1 to 3 carbon atoms, or an aralkyl group having 7 to 12 carbon atoms, more preferably hydrogen, an alkyl group having 1 to 6 carbon atoms, an aryl group having 6 to 8 carbon atoms, an alkenyl group having 2 to 4 carbon atoms, an alkoxy group having 1 or 2 carbon atoms, or an aralkyl group having 7 to 10 carbon atoms, even more preferably hydrogen, an alkyl group having 1 to 3 carbon atoms, an aryl group having 6 or 7 carbon atoms, an alkenyl group having 2 or 3 carbon atoms, an alkoxy group having 1 carbon atom, or an aralkyl group having 7 or 8 carbon atoms, and particularly preferably hydrogen, an alkyl group having 1 or 2 carbon atoms, or an aryl group having 6 or 7 carbon atoms.

X in formula (2) is represented by any one of formulae (3) below:

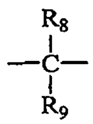 , $-S-$ , $-(CH_2)_c-$ , $-O-$ , $-SO-$ , $-CO-$ , $-SO_2-$ ,

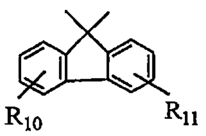 , 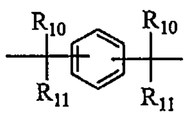 , 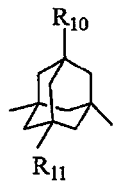 , 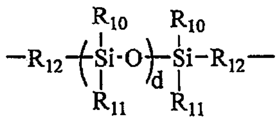

(3)

In formula (3), $R_8$ and $R_9$ are each independently hydrogen, fluorine, chlorine, bromine, or iodine, or an alkyl group having 1 to 20 carbon atoms, an alkoxy group having 1 to 5 carbon atoms, or an aryl group having 6 to 12 carbon atoms, each of which may have a substituent, or $R_8$ and $R_9$ may bind to each other to form a carbocyclic ring having 5 to 20 carbon atoms or a 5 to 12-membered heterocyclic ring. $R_8$ and $R_9$ are preferably hydrogen, an alkyl group having 1 to 3 carbon atoms, or a group in which $R_8$ and $R_9$ bind to each other to form a carbocyclic ring having 5 to 12 carbon atoms.

In formula (3), $R_{10}$ and $R_{11}$ are each independently hydrogen, fluorine, chlorine, bromine, or iodine, or an alkyl group having 1 to 9 carbon atoms, an alkoxy group having 1 to 5 carbon atoms, an alkenyl group having 2 to 12 carbon atoms, or an aryl group having 6 to 12 carbon atoms, each of which may have a substituent. $R_{10}$ and $R_{11}$ are preferably hydrogen or an aryl group having 6 to 8 carbon atoms.

In formula (3), each $R_{12}$ is independently an alkylene group having 1 to 9 carbon atoms, which may have a substituent, preferably an alkylene group having 1 to 3 carbon atoms, and more preferably an alkylene group having 1 or 2 carbon atoms.

In formula (3), c is an integer of 0 to 20, and d is an integer of 1 to 500.

c is preferably an integer of 0 to 10, and more preferably an integer of 0 to 3.

d is preferably an integer of 1 to 300, and more preferably an integer of 1 to 100.

The above-described substituents are each independently selected from a halogen, a hydroxyl group, a cyano group, an alkyl group having 1 to 20 carbon atoms, an alkenyl group having 1 to 20 carbon atoms, an aryl group having 6 to 12 carbon atoms, etc., and when an alkyl group, an alkenyl group, and an aryl group are included as the substituents, the number of carbon atoms in $R_1$ to $R_{12}$ described above is the total number of carbon atoms including carbon atoms of the substituents.

Examples of preferred forms of the structural unit (B) include those derived from a monomer of any one of formula (4) to formula (10) above, and examples of bisphenol compounds that can form the structural unit (B) include, but are not limited to, 4,4'-biphenyldiol, bis(4-hydroxyphenyl)methane (bisphenol F; BPF), bis(2-hydroxyphenyl)methane, 2,4'-dihydroxydiphenylmethane, bis(4-hydroxyphenyl)ether, bis(4-hydroxyphenyl)sulfone, 2,4'-dihydroxydiphenylsulfone, bis(2-hydroxyphenyl)sulfone, bis(4-hydroxy-3-methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane (bisphenol E; BPE), 1,1-bis(4-hydroxyphenyl)-1-phenylethane (bisphenol AP; BPAP), bis(4-hydroxyphenyl)diphenylmethane (bisphenol BP; BPBP), 2,2-bis(4-hydroxyphenyl)propane (bisphenol A; BPA), 2,2-bis(4-hydroxy-3-methylphenyl)propane, 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane (bisphenol B; BPB), 1,1-bis(4-hydroxyphenyl)cyclohexane (bisphenol Z; BPZ), 1,1-bis(4-hydroxy-3-methylphenyl)cyclohexane, 1,1-bis(4-hydroxyphenyl)cycloundecane, 1,1-bis(4-hydroxyphenyl)cyclododecane (bisphenol CD), 2,2-bis(4-hydroxy-3-allylphenyl)propane, 3,3,5-trimethyl-1,1-bis(4-hydroxyphenyl)cyclohexane, 9,9-bis(4-hydroxy-3-ethylphenyl)fluorene, 9,9-bis(4-hydroxy-3-methylphenyl)fluorene, 9,9-bis(4-hydroxyphenyl)fluorene, α,ω-bis[3-(o-hydroxyphenyl)propyl]polydimethyldiphenyl random copolymerized siloxane, α,ω-bis[3-(o-hydroxyphenyl)propyl] polydimethylsiloxane, 4,4'-[1,4-phenylenebis(1-methylethylidene) bisphenol, 4,4'-[1,3-phenylenebis(1-methylethylidene)]bisphenol, 2,2-bis(4-hydroxy-3-isopropylphenyl)propane (bisphenol G), 1,1-bis(4-hydroxyphenyl)-2-ethylhexane (bisphenol IOTD), 1,1-bis(4-hydroxyphenyl)-2-methylpropane (bisphenol IBTD), 1,1-bis(4-hydroxyphenyl)-2-methylpentane (bisphenol MIBK), 5,5'-(1-methylethylidene)-bis[1,1'-(bisphenyl)-2-ol]propane (bisphenol PH), 1,1-bis(4-hydroxyphenyl)-3,3,5-trimethylcyclohexane (bisphenol TMC), 2,2-bis(4-hydroxyphenyl)-4-methylpentane, 1,1-bis(4-hydroxyphenyl)decane, and 1,3-bis(4-hydroxyphenyl)-5,7-dimethyladamantane. These materials may be used solely, or two or more of them may be used in combination.

Examples of preferred forms of the structural unit (B) include a structural unit of any one of formula (4A) to formula (10A) below, which is derived from a monomer of any one of formula (4) to formula (10) above.

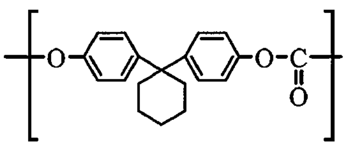
(4 A)

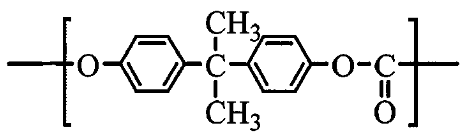
(8 A)

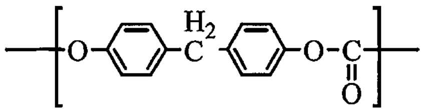
(5 A)

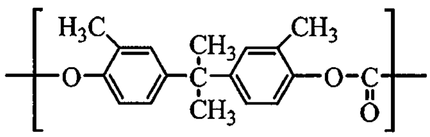
(9 A)

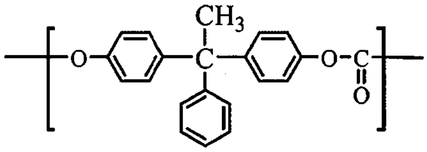
(6 A)

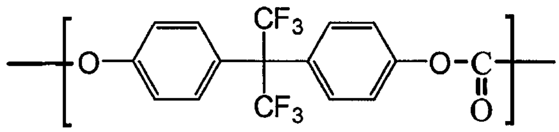
(1 0 A)

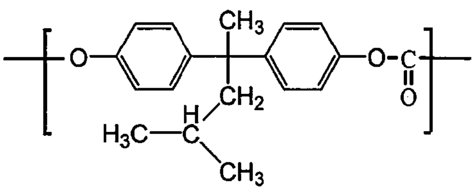
(7 A)

The polycarbonate resin may include a structural unit (C) derived from a branching agent. Specific examples of preferred branching agents include a branching agent having a plurality of aromatic rings and a plurality of phenolic hydroxyl groups. Examples of structural units that may be included in the polycarbonate resin include a structural unit derived from a branching agent represented by formula (11) below.

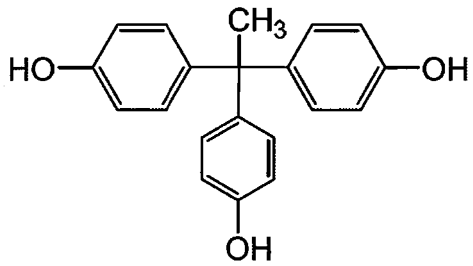

(1 1)

In the polycarbonate resin, the content of the structural unit (C) derived from the branching agent is preferably 15% by mass or less or 10% by mass, more preferably 8% by mass or less or 5% by mass or less, even more preferably 3% by mass or less or 2% by mass or less, and particularly preferably 1% by mass or less or 0.5% by mass or less based on the total weight of the polycarbonate resin. Further, the polycarbonate resin does not have to include the structural unit (C).

In addition to the polycarbonate resin, a polyester carbonate resin or a polyester resin may be included in the resin composition. The polyester carbonate resin and the polyester resin that may be included in the resin composition preferably include a structural unit formed from a monomer that brings the above-described structural unit (B).

Further, a polyester carbonate structural unit or a polyester structural unit may be included in the polycarbonate resin. The polyester carbonate structural unit and the polyester structural unit are preferably a structural unit formed from a monomer that brings the above-described structural unit (B).

In the resin composition, the content of each of the polyester carbonate resin and the polyester resin is preferably 15% by mass or less or 10% by mass, more preferably 8% by mass or less or 5% by mass or less, even more preferably 3% by mass or less or 2% by mass or less, and particularly preferably 1% by mass or less or 0.5% by mass or less based on the total weight of these resins and the polycarbonate resin.

The resin composition does not have to include the polyester carbonate resin or the polyester resin.

In the polycarbonate resin, the total content of the polyester carbonate structural unit and the polyester structural unit is preferably 15% by mass or less or 10% by mass or less, more preferably 8% by mass or less or 5% by mass or less, even more preferably 3% by mass or less or 2% by mass or less, and particularly preferably 1% by mass or less or 0.5% by mass or less based on the total weight of these structural units and the structural unit (B).

Further, the polycarbonate resin does not have to include the polyester carbonate structural unit or the polyester structural unit.

1-3. Active Methylene-Based Block Polyisocyanate

The resin composition includes an active methylene-based block polyisocyanate. The active methylene-based block polyisocyanate is produced by reacting an active methylene compound with a polyisocyanate compound according to a publicly-known method. Examples of the active methylene compound include an acetoacetic acid ester compound and a malonic acid diester compound.

Examples of the acetoacetic acid ester compound include methyl acetoacetate, ethyl acetoacetate, isopropyl acetoacetate, n-propyl acetoacetate, t-butyl acetoacetate, n-butyl acetoacetate, benzyl acetoacetate, and phenyl acetoacetate. These acetoacetic acid ester compounds may be used solely, or two or more of them may be used in combination. Examples of the malonic acid diester compound include dimethyl malonate, diethyl malonate, diisopropyl malonate, di-n-propyl malonate, di-n-butyl malonate, ethyl n-butyl malonate, methyl n-butyl malonate, ethyl t-butyl malonate, methyl t-butyl malonate, diethyl methylmalonate, dibenzyl malonate, diphenyl malonate, benzyl methyl malonate, ethyl phenyl malonate, t-butylphenyl malonate, and isopropylidene malonate. These malonic acid diester compounds may be used solely, or two or more of them may be used in combination.

The polyisocyanate compound described above is derived from, for example, an aliphatic, alicyclic or aromatic diisocyanate. An aliphatic diisocyanate having 4 to 30 carbon atoms and an alicyclic/aromatic diisocyanate having 8 to 30 carbon atoms are preferred. Examples of diisocyanate compounds include tetramethylene diisocyanate, pentamethylene diisocyanate, hexamethylene diisocyanate (HDI), 2,2,4- or 2,4,4-trimethyl-1,6-diisocyanate hexane, lysine diisocyanate, isophorone diisocyanate (IPDI), 1,3-bis(isocyanatomethyl)-cyclohexane, 4,4'-dicyclohexylmethane diisocyanate, tolylene diisocyanate, 4,4'-diphenylmethane diisocyanate, 1,5-naphthalene diisocyanate, tolidine diisocyanate, and xylylene diisocyanate. These diisocyanates may be used solely, or two or more of them may be used in combination.

Examples of polyisocyanates derived from the above-described diisocyanates include an isocyanurate type polyisocyanate, a biuret type polyisocyanate, a urethane type polyisocyanate, and an allophanate type polyisocyanate. The average number of functional groups of the polyisocyanates is preferably 2 to 15.

The reaction between the active methylene compound and the polyisocyanate compound may be performed using a publicly-known technique. For example, the reaction between the active methylene compound and the polyisocyanate compound may be performed with or without a solvent. When a solvent is used, it is preferred to use a solvent that is inactive to isocyanate groups. A catalyst may be used, and examples of the catalyst include: an organometallic compound such as an organolead compound including lead octylate; an organotin compound such as dibutyltin diacetate, dibutyltin dilaurate, tetrabutyl diacetoxy stannoxane, and tin octylate; an organozinc compound such as zinc octylate; a metal alcoholate such as sodium methylate; and a tertiary amine such as triethylenediamine.

The reaction between the active methylene compound and the polyisocyanate compound is performed at a temperature of, for example, -20 to 150°C, and preferably 0 to 100°C.

As the active methylene-based block polyisocyanate, an existing product, for example, Blonate 1232E (manufactured by Daiei Sangyo Kaisha, Ltd.) or the like can be employed.

1-4. Amine-Based Catalyst

The resin composition includes an amine-based catalyst, that is, a catalyst having an amine compound. As the amine-based catalyst, a non-basic amine-based catalyst with low basicity is preferably used. The non-basic amine-based catalyst has, for example, an amine compound in which the pKa value of the conjugate acid is, for example, 6.0 or less, preferably 4.0 or less, more preferably 2.0 or less, even more preferably 1.0 or less, and particularly preferably 0 or less.

The compound of the amine-based catalyst preferably has a phenyl group, more preferably has two or three phenyl groups, and particularly preferably has a triphenylamine structure.

Specific examples of preferred compounds of the amine-based catalyst include those represented by formula (12) to formula (14).

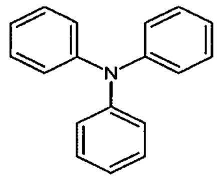

(1 2)

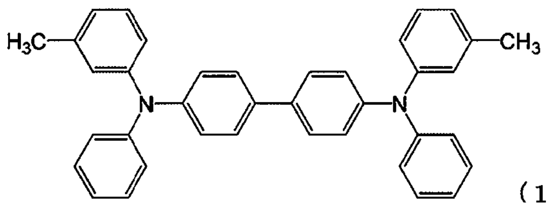

(1 3)

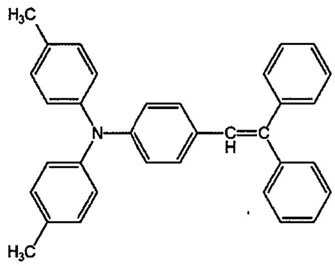

(1 4)

1-5. Other Components

The resin composition may include components other than the polycarbonate resin, the active methylene-based block polyisocyanate, and the amine-based catalyst. For example, additives such as an antioxidant, a rust inhibitor, a dispersant, an ultraviolet absorber, a defoamer, and a leveling agent may be included in the resin composition.

In the resin composition, the total weight of secondary components excluding the polycarbonate resin, the active methylene-based block polyisocyanate, and the amine-based catalyst is, for example, 15% by mass or less based on the total mass of the resin composition. The total weight of the secondary components is, for example, 12% by mass or less or 10% or less, more preferably 8% by mass or less or 6% or less, and particularly preferably 4% by mass or less, 2% by mass or less, or 1% by mass or less.

1-6. Characteristics of Components in Resin Composition

The polycarbonate resin preferably has a hydroxyl value (OH value), which is measured by the method described later, of 0.5 to 10 mgKOH/g. The hydroxyl value of the polycarbonate resin is more preferably 0.7 to 9 mgKOH/g, even more preferably 1 to 8 mgKOH/g, and particularly preferably 3 to 6 mgKOH/g.

Further, the hydroxyl value of the polycarbonate resin is, for example, 0.1 mgKOH/g or more, preferably 0.3 mgKOH/g or more or 0.5 mgKOH/g or more, more preferably 0.7 mgKOH/g or more or 1.0 mgKOH/g or more, and particularly preferably 1.5 mgKOH/g or more or 2.0 mgKOH/g or more.

The isocyanate (NCO) content in the active methylene-based block polyisocyanate, that is, the weight ratio of NCO groups based on the total weight of the molecules of the active methylene-based block polyisocyanate, is preferably 4.0 to 12.0% by mass. The isocyanate (NCO) content in the active methylene-based block polyisocyanate is more preferably 6.0 to 11.5% by mass, and even more preferably 9.0 to 11.0% by mass.

The NCO/OH ratio (mol/mol) in the active methylene-based block polyisocyanate is preferably 0.5 to 1.5. The NCO/OH ratio (mol/mol) is calculated from the above-described isocyanate content and the hydroxyl value of the polycarbonate resin according to formula (I) below.

$$\text{NCO/OH ratio (molar ratio)} = \text{NCO (mol)/OH (mol)} = \frac{(\text{active methylene-based block polyisocyanate [g]} \times \text{NCO content [\% by mass]}/100)/42\ [\text{g/mol}]}{\text{OH value [mg-KOH/g]} \times \text{polycarbonate resin [g]}/56100\ [\text{mg/mol}]} \quad \ldots\ldots \text{(I)}$$

The NCO/OH ratio (mol/mol) in the active methylene-based block polyisocyanate is more preferably 0.7 to 1.4, and even more preferably 0.8 to 1.3.

2. Resin Solution

The resin solution of the present invention includes the above-described resin composition and a solvent. In the resin solution, the resin composition and the solvent may be mixed at any ratio, but the concentration of the resin composition in the resin solution is, for example, 1.0 to 70% by weight, preferably 5.0 to 50% by weight, and more preferably 10 to 30% by weight.

The solvent in the resin solution preferably has high solubility for the resin composition, and is selected, for example, from the group consisting of a halogen-based solvent, an ester-based solvent, an ether-based solvent, a carbonic acid ester-based solvent, and a ketone-based solvent. These solvents may be used solely, or two or more of them may be used in combination.

The viscosity of the resin solution can be set arbitrarily depending on the desired coating method, but is preferably 10 to 20000 mPa/s. In the case of airless spray, brush coating or roller coating, the viscosity is preferably 400 to 20000 mPa/s. In the case of air spray, the viscosity is preferably 100 to 6000 mPa·s. In the case of dip coating or can spray, the viscosity is preferably 10 to 500 mPa·s.

To the resin solution, pigments, dyes, colored particles, and particles having optical interference properties can be added in order to enhance color effects. Examples of pigments and dyes include organic pigments such as an azo pigment and a phthalocyanine pigment, and specific examples thereof include Red No. 104, Red No. 106, Red No. 201, Red No. 202, Red No. 204, Red No. 215, Red No. 220, Orange No. 203, Orange No. 204, Blue No. 1, Blue No. 404, Yellow No. 205, Yellow No. 401, and Yellow No. 405. Further, it is also possible to use titanium mica, titanium oxide, iron oxide, tin oxide, zirconium oxide, chromium oxide, bismuth oxychloride, silica, chromium, titanium nitride, titanium, magnesium fluoride, gold, silver, nickel, etc. in order to produce white, pearl color, metallic color, or glittery color. The particles having optical interference properties are particles that reflect or scatter light to enhance color effects, and examples thereof include glass beads, tiny shells, and mica. These materials are preferably added in an amount of 0.0001 to 10.0% by mass in the coating as desired.

To the resin solution, a rust inhibitor, an antioxidant, a dispersant, an ultraviolet absorber, a defoamer, a leveling agent, etc. may be added according to need.

The blending amount of the resin composition in the coating resin solution of the present invention depends on the limiting viscosity and solvent solubility, but is preferably 1 to 50% by mass, and more preferably 4 to 30% by mass. When the concentration is within the above-described range, a good balance between solvent solubility and coatability is achieved, and workability and outer appearance are improved.

## 3. Method for Producing Resin Composition

The polycarbonate resin to be used in the present invention can be produced by an ordinary method. For example, it is produced as described below.

The polycarbonate resin to be used in the present invention can be produced, for example, by reacting a monohydric phenol that derives the terminal structure (A), a bisphenol that derives the structural unit (B), and a carbonate ester-forming compound. An already-known method, for example, a direct reaction between bisphenol and phosgene (phosgene method) or a transesterification reaction between bisphenol and bisaryl carbonate (transesterification method) can be employed.

In the phosgene method, for example, usually in the presence of an acid binding agent and a solvent, bisphenol, a monohydric phenol that derives the terminal structure (A), and phosgene are reacted. As the acid binding agent, for example, pyridine, a hydroxide of an alkali metal such as sodium hydroxide and potassium hydroxide or the like is used. As the solvent, for example, methylene chloride, chloroform or the like is used. Further, for promoting a polycondensation reaction, a catalyst such as a tertiary amine including triethylamine, a quaternary ammonium salt including benzyltriethylammonium chloride or the like is preferably used.

The monohydric phenol that derives the terminal structure (A) functions as a polymerization degree regulator, and in addition to this, another monohydric phenol such as phenol, p-t-butylphenol, p-cumylphenol, and long chain alkyl substituted phenol can be used in combination in an amount of less than 50% by mass relative to the monohydric phenol that derives the terminal structure (A). Furthermore, if desired, an antioxidant such as sodium sulfite and hydrosulfite and a branching agent such as phloroglucin and isatin bisphenol may be added in a small amount. The reaction temperature is usually 0 to 150°C, and preferably 5 to 40°C. The reaction time varies depending on the reaction temperature, but is usually 0.5 min to 10 hours, and preferably 1 min to 2 hours. Further, during the reaction, pH of the reaction system is desirably maintained at 10 or higher.

Meanwhile, in the transesterification method, for example, bisphenol, the monohydric phenol that derives the terminal structure (A), and bisaryl carbonate are mixed and reacted at a high temperature under reduced pressure.

Examples of the bisaryl carbonate include diphenyl carbonate, di-p-tolyl carbonate, phenyl-p-tolyl carbonate, di-p-chlorophenyl carbonate, and dinaphthyl carbonate. Two or more of these compounds may be used in combination. The reaction is performed usually at 150 to 350°C, and preferably at 200 to 300°C. Further, the pressure reducing degree is preferably adjusted to 1 mmHg or lower finally, and phenols derived from the bisaryl carbonate produced by means of the transesterification reaction are distilled away to the outside of the system. The reaction time varies depending on the reaction temperature, the pressure reducing degree, etc., but is usually about 1 to 24 hours. The reaction is preferably performed under an atmosphere of an inert gas such as nitrogen and argon. Further, if desired, the reaction may be performed with a small amount of a molecular weight control agent other than the monohydric phenol that derives the terminal structure (A) being used in combination and with an antioxidant and a branching agent being added.

The polycarbonate resin to be used in the present invention preferably keeps solvent solubility, coatability, adhesion, scratch resistance, impact resistance, etc. that are required for a coating film-forming resin for a coating resin solution in good balance. When the limiting viscosity of the resin is too low, scratch resistance and impact resistance strength are insufficient, and when the limiting viscosity is too high, solvent solubility is reduced, solution viscosity is increased, and coatability is reduced. Regarding the desirable range of the limiting viscosity, the limiting viscosity is preferably 0.3 to 2.0 dl/g, and more preferably 0.35 to 1.5 dl/g.

In the present invention, the resin composition includes an active methylene-based block polyisocyanate compound as described above.

The active methylene-based block polyisocyanate compound included in the polycarbonate resin composition is preferably a compound having two or more isocyanate groups in one molecule. By using the compound having two or more isocyanate groups in one molecule as the active methylene-based block polyisocyanate compound, a crosslinked structure is formed in the resin composition, and accordingly a crosslinked coating film can be produced.

## 4. Method for Producing Resin Solution

The resin solution of the present invention is a solution in which the resin composition is dissolved in the above-described solvent, and in this state, it becomes a coating film that is generally called clear color. A desired dye and/or pigment may be further dissolved or dispersed therein to provide a colored coating film.

## 5. Crosslinked Coating Film and Method for Producing Coating Film

A crosslinked coating film can be produced by a heating process in which the solvent is removed from the resin solution and the resin composition as a residue is heated. The heating process causes crosslinking and polymerization reaction with respect to the resin composition to form a coating film. In the heating process, the temperature is preferably 50

to 150°C, more preferably 70 to 130°C, and even more preferably 80 to 120°C.

The crosslinked coating film is preferably formed on, for example, a PVB (polybutyral resin) substrate or a PET (polyethylene terephthalate resin) substrate. The crosslinked coating film formed on these substrates is excellent particularly in adhesion to the substrates. Such a coating film obtained by coating with the resin solution and curing it by heating is less likely to be scratched or peeled off due to friction, impact, etc. during transportation or use when compared to coating films of conventional resin solutions.

The thickness of the crosslinked coating film is preferably 5 to 200 μm, more preferably 10 to 120 μm, and particularly preferably 15 to 60 μm. In the case of a thin coating film of less than 5 μm in thickness, the strength is insufficient and scratches tend to easily reach substrates. In the case of a too-thick coating film of more than 200 μm in thickness, it is likely to peel off due to shrinkage of the coating film, and in consideration of the use of the coating film that will peel off and be discarded in the end, it is economically disadvantageous.

The above-described resin solution may be used as a binder resin solution to provide a printing ink. Such a printing ink can be used, for example, for decorative printing. In general, a printing ink for decorative printing is mainly composed of a solvent, a dye/pigment, and a binder resin. Examples of the dye or pigment used in the printing ink include, but are not limited to, dyes such as an anthraquinone-based dye and a naphthoquinone-based dye, inorganic pigments such as titanium oxide, carbon black, calcium carbonate, and metal particles, and organic pigments such as an azo pigment and a phthalocyanine pigment. The dye/pigment exists in the ink in a dissolved or dispersed state together with the binder resin. A printing ink obtained by using the resin solution of the present invention as the binder resin solution is excellent in adhesion.

In addition to the binder resin and the dye/pigment, fine organic and inorganic particles, a mold release agent, an antioxidant, a plasticizer, a dispersant, an infrared absorber, an antistatic agent, an ultraviolet absorber, a defoamer, a leveling agent, etc. may be added to the printing ink according to need.

The blending amount of the binder resin in the printing ink depends on the limiting viscosity and solvent solubility, but is preferably 1 to 70% by mass, and more preferably 5 to 50% by mass. When the concentration of the binder resin is within the above-described range, a good balance between solvent solubility and ink coatability is achieved, and workability is improved.

## 6. Base Material Film

A base material film is, for example, one obtained by performing coating with the above-described printing ink. After decorative printing is performed on a base material film which is not yet coated with the printing ink, a solvent is removed by drying, and a dye/pigment is fixed to a binder resin while the film and the binder resin are adhered to each other, thereby obtaining a decoratively printed film, i.e., a base material film coated with the above-described printing ink. As the method for coating a base material with the printing ink, an ordinary method can be used, and examples thereof include, but are not limited to, screen printing, gravure printing, and flexographic printing.

## 7. Film or Coating

By using the polycarbonate resin composition of the present invention, a film, coating or the like may be formed. The film or coating contains the above-described polycarbonate resin composition, and the coating may include forms other than crosslinked coatings. In one embodiment, a film or coating film containing the above-described polycarbonate resin composition or a crosslinked composition in which at least a part of the above-described polycarbonate resin composition is crosslinked is provided.

In one embodiment of the present invention, the above-described coating film can be obtained by applying the resin solution or printing ink to a base material and then heating or drying it. In one embodiment of the present invention, the above-described coating film may be a single layer or a multi-layer laminate.

# EXAMPLES

### (Synthesis Example 1)

In 1200 parts by mass of 5% (w/w) aqueous solution of sodium hydroxide, 57.3 parts by mass of 1,1-bis(4-hydroxyphenyl)cyclohexane (hereinafter abbreviated as "BPZ"; manufactured by Honshu Chemical Industry Co., Ltd.), 42.7 parts by mass of bis(4-hydroxyphenyl)methane (hereinafter abbreviated as "BPF"; manufactured by Sanko Co., Ltd.), and 0.5 parts by mass of hydrosulfite were dissolved. 450 parts by mass of methylene chloride was added thereto, and while stirring, 60 parts by mass of phosgene was then injected therein over 40 minutes while maintaining the temperature at 15°C. After the injection of phosgene was completed, 2.74 parts by mass of p-hydroxyphenethyl alcohol (hereinafter abbreviated as "PHEP"; manufactured by Otsuka Chemical Co., Ltd.) as a molecular weight control agent

(end terminator) was added thereto, and the mixture was vigorously stirred to emulsify the reaction solution. After emulsification, 0.5 parts by mass of triethylamine was added thereto, and the mixture was stirred at 20 to 25°C for about 1 hour to perform a polymerization.

After the polymerization was completed, the reaction solution was separated into an aqueous phase and an organic phase, the organic phase was neutralized with phosphoric acid, and washing with water was repeated until the conductivity of the former solution (aqueous phase) became 10 μS/cm or less. The resulting polymer solution was dropped into warm water whose temperature was kept at 50°C to remove the solvent by evaporation to obtain a white powdery precipitate. The resulting precipitate was filtered and dried at 105°C for 24 hours to obtain a polymer powder.

The limiting viscosity of a solution of this polymer (solvent: dichloromethane, concentration: 0.5 g/dl) at 20°C was 0.65 dl/g. The obtained polymer was analyzed by means of infrared absorption spectrum, and absorption by carbonyl groups was confirmed at a position near 1770 $cm^{-1}$ and absorption by ether bonds was confirmed at a position near 1240 $cm^{-1}$. It was confirmed that the polymer was a polycarbonate resin having carbonate bonds (hereinafter abbreviated as "PC-1"). The hydroxyl value of the obtained polymer was 5 mgKOH/g.

(Synthesis Example 2)

A polycarbonate resin was obtained by performing polymerization in a manner similar to that in Synthesis Example 1, except that the amount of PHEP was changed to 0.97 parts by mass (limiting viscosity: 1.14 dl/g, hydroxyl value: 1 mgKOH/g, hereinafter abbreviated as "PC-2").

(Synthesis Example 3)

A polycarbonate resin was obtained by performing polymerization in a manner similar to that in Synthesis Example 1, except that 48.2 parts by mass of 2,2-bis(4-hydroxyphenyl)-4-methylpentane (hereinafter abbreviated as "MIBK"; manufactured by Honshu Chemical Industry Co., Ltd.) was used instead of BPZ, 1,1-bis(4-hydroxyphenyl)-1-phenylethane (hereinafter abbreviated as "BPAP"; manufactured by Honshu Chemical Industry Co., Ltd.) was used instead of BPF, and the amount of PHEP was changed to 1.64 parts by mass (limiting viscosity: 0.60 dl/g, hydroxyl value: 3 mgKOH/g, hereinafter abbreviated as "PC-3").

(Synthesis Example 4)

A polycarbonate resin was obtained by performing polymerization in a manner similar to that in Synthesis Example 1, except that 60 parts by mass of 2,2-bis(4-hydroxyphenyl)propane (hereinafter abbreviated as "BPA"; manufactured by Honshu Chemical Industry Co., Ltd.) was used instead of BPZ, 2,2-bis(4-hydroxy-3-methylphenyl) propane (hereinafter abbreviated as "BPC"; manufactured by Honshu Chemical Industry Co., Ltd.) was used instead of BPF, 0.05 parts by mass of benzyltriethylammonium chloride (manufactured by FUJIFILM Wako Pure Chemical Corporation) was added as a phase transfer catalyst, and the amount of PHEP was changed to 4.52 parts by mass (limiting viscosity: 0.41 dl/g, hydroxyl value: 8 mgKOH/g, hereinafter abbreviated as "PC-4").

(Synthesis Example 5)

A polycarbonate resin was obtained by performing polymerization in a manner similar to that in Synthesis Example 1, except that 22.2 parts by mass of BPA was used instead of BPZ, 77.8 parts by mass of 2,2-bis(4-hydroxyphenyl)hexafluoropropane (hereinafter abbreviated as "BPAF"; manufactured by Central Glass Co., Ltd.) was used instead of BPF, and the amount of PHEP was changed to 0.91 parts by mass (limiting viscosity: 0.55 dl/g, hydroxyl value: 2 mgKOH/g, hereinafter abbreviated as "PC-5").

(Synthesis Example 6)

A polycarbonate resin was obtained by performing polymerization in a manner similar to that in Synthesis Example 1, except that the amount of BPZ was changed to 56.9 parts by mass, the amount of BPF was changed to 42.5 parts by mass, and 0.70 parts by mass of 1,1,1-tris(4-hydroxyphenyl)ethane (hereinafter abbreviated as "TPE"; manufactured by Honshu Chemical Industry Co., Ltd.) was added (limiting viscosity: 0.62 dl/g, hydroxyl value: 5 mgKOH/g, hereinafter abbreviated as "PC-6").

(Synthesis Example 7)

A polycarbonate resin was obtained by performing polymerization in a manner similar to that in Synthesis

Example 1, except that 0.84 parts by mass of 4-t-butylphenol (hereinafter abbreviated as "PTBP"; manufactured by Dainippon Ink and Chemicals, Inc.) was used instead of PHEP (limiting viscosity: 0.93 dl/g, hydroxyl value: 0 mgKOH/g, hereinafter abbreviated as "PC-7").

1) Limiting Viscosity

The values of limiting viscosities were obtained by using an Ubbelohde viscosity tube with a 0.5% (mass/volume) dichloromethane solution of polycarbonate resin at 20°C and a Huggins constant of 0.45. Specifically, the viscosity average molecular weight (Mv) was measured and the limiting viscosity [η] was calculated as described below.

Measurement apparatus: Ubbelohde capillary viscometer
Solvent: dichloromethane
Concentration of resin solution: 0.5 gram/deciliter
Measurement temperature: 25°C

The viscosity average molecular weight (Mv) was measured under the above-described conditions and the limiting viscosity [η] (deciliter/gram) was calculated according to the below-described formula with a Huggins constant of 0.45.

$$\eta = 1.23 \times 10^{-4} \times Mv^{0.83}$$

2) Hydroxyl Value

In accordance with JIS K 0070, 2 g of polycarbonate resin was dissolved in 80 mL of chloroform, and 2-propanol was added thereto. This solution was titrated with 0.01 mol/L alcoholic KOH solution using a potentiometric titrator, and the inflection point obtained was taken as the end point. A blank test was conducted in the same way, and the acid value was calculated according to the below-described formula.

$$\text{Acid value (mgKOH/g)} = (V1\text{-}V0) \times N \times 56.11 \times f/S$$

S: sample mass (g)
V0: volume of titrant in blank test (mL)
V1: volume of titrant in main test (mL)
N: concentration of titrant (mol/L)
f: titrant factor (1.003)

Further, in accordance with JIS K 0070, 25 g/L of acetic anhydride-pyridine solution was added to 10 g of polycarbonate resin, an air-cooled tube was attached, and then the mixture was heated in an oil bath at 105°C for 2.5 hours. After cooled with water, 1 mL of purified water was added thereto, and the mixture was further heated in an oil bath for 20 hours. After cooled with water, 5 mL of ethanol was added while rinsing the air-cooled tube with it, and 60 mL of pyridine was further added. This solution was titrated with 0.5 mol/L alcoholic potassium hydroxide solution using a potentiometric titrator, and the inflection point obtained was taken as the end point. A blank test was conducted in the same way, and the hydroxyl value was calculated according to the below-described formula.

$$\text{Hydroxyl value (mgKOH/g)} = [(V1\text{-}V0) \times N \times 56.11 \times f/S] + \text{acid value}$$

S: sample mass (g)
V0: volume of titrant in blank test (mL)
V1: volume of titrant in main test (mL)
N: concentration of titrant (mol/L)
f: titrant factor (1.001)

3) Number of Peeled Pieces in Crosscut Test

With respect to the crosslinked coating film formed on the PVB substrate and the crosslinked coating film formed

on the PET substrate obtained in the Examples, the following crosscut test was conducted.

Crosscut: Using a cutter, six cuts were made in the crosslinked coating film, and then six cuts perpendicular thereto were made by turning the film 90°. In this way, 25 test pieces were successfully produced on the substrate. A cellophane tape cut to 75 mm was attached and adhered onto the test pieces, and Sellotape (registered trademark) was peeled off at an angle of 60°. Then the number of test pieces peeled off from the PVB substrate or PET substrate was counted. The sum of the counted numbers of test pieces peeled off from the PVB substrate and the PET substrate was taken as the comprehensive evaluation. Accordingly, it can be said that the smaller the value of the comprehensive evaluation shown in Table 1 below with respect to the Examples and Comparative Examples, the better the adhesion of the coating film to the substrate.

(Example 1)

10 parts by mass of the polycarbonate resin (PC-1) obtained in Synthesis Example 1, 0.3 parts by mass of Blonate 1232E (hereinafter abbreviated as "BI-1"; active methylene-based block isocyanate; manufactured by Daiei Sangyo Kaisha, Ltd.), and 5.8 parts by mass of triphenylamine (hereinafter abbreviated as "CT-1"; manufactured by FUJIFILM Wako Pure Chemical Corporation) were dissolved in 70 parts by mass of dichloromethane to obtain a resin solution containing a resin composition.

The resin solution was applied to a PVB substrate using a cast coater in a manner such that the dried film thickness became 60 to 100 μm, and then air drying was performed for 24 hours. After that, a crosslinking reaction was performed at 100°C for 1 hour while drying was carried out simultaneously, and thus a crosslinked coating film was formed on the PVB substrate.

Regarding the PVB substrate used, 3.5 parts by mass of PVB resin (S-LEC BX-1; manufactured by Sekisui Chemical Co., Ltd.) was dissolved in 31.5 parts by mass of tetrahydrofuran, the resulting solution was applied to a glass substrate in a manner such that the dried film thickness became 80 μm, air drying was performed for 24 hours, and then drying was further carried out at 100°C for 1 hour, and thus the PVB substrate was prepared.

Further, the aforementioned resin solution was applied to a PET substrate using a cast coater in a manner such that the dried film thickness became 60 to 100 μm, and then air drying was performed for 24 hours. After that, a crosslinking reaction was performed at 100°C for 1 hour while drying was carried out simultaneously, and thus a crosslinked coating film was formed on the PET substrate. Physical properties of the obtained crosslinked coating films are shown in Table 1.

(Examples 2 to 11, Comparative Examples 1 to 8)

A resin solution containing a resin composition was obtained and crosslinked coating films were formed in a manner similar to that in Example 1, except that the resin, polyisocyanate, and amine-based catalyst shown in Table 1 were used. Physical properties of the obtained crosslinked coating films are shown in Table 1.

Table 1

| | PC | | | | | | | | | | | | Block polyisocyanate (BI) (*1) | Catalyst (*2) | Parts by weight | | | NCO/OH (molar ratio) | Number of peeled pieces in crosscut test | | Comprehensive evaluation |
|---|---|---|---|---|---|---|---|---|---|---|---|---|---|---|---|---|---|---|---|---|---|
| | PC type | Monomer (mol%) | | | | Branching agent | mol% | Molecular weight control agent (terminal structure) | mol% | Limiting viscosity (dl/g) | Hydroxyl value (mg-KOH/g) | | | | PC | BI | Catalyst | | PVB | PET | |
| Example 1 | PC-1 | BPZ | 47.9 | BPF | 47.9 | - | 0 | PHEP | 4.25 | 0.65 | 5 | | BI-1 | CT-1 | 10 | 0.3 | 5.8 | 1 | 18 | 17 | 35 |
| Example 2 | PC-1 | BPZ | 47.9 | BPF | 47.9 | - | 0 | PHEP | 4.25 | 0.65 | 5 | | BI-1 | CT-1 | 10 | 0.3 | 2.9 | 1 | 0 | 25 | 25 |
| Example 3 | PC-1 | BPZ | 47.9 | BPF | 47.9 | - | 0 | PHEP | 4.25 | 0.65 | 5 | | BI-1 | CT-2 | 10 | 0.3 | 6.8 | 1 | 2 | 19 | 21 |
| Example 4 | PC-1 | BPZ | 47.9 | BPF | 47.9 | - | 0 | PHEP | 4.25 | 0.65 | 5 | | BI-1 | CT-3 | 10 | 0.3 | 10 | 1 | 0 | 2 | 2 |
| Example 5 | PC-1 | BPZ | 47.9 | BPF | 47.9 | - | 0 | PHEP | 4.25 | 0.65 | 5 | | BI-1 | CT-3 | 10 | 0.3×0.75 | 10 | 0.75 | 0 | 0 | 0 |
| Example 6 | PC-1 | BPZ | 47.9 | BPF | 47.9 | - | 0 | PHEP | 4.25 | 0.65 | 5 | | BI-1 | CT-3 | 10 | 0.3×1.25 | 10 | 1.25 | 9 | 0 | 9 |
| Example 7 | PC-2 | BPZ | 49.3 | BPF | 49.3 | - | 0 | PHEP | 1.50 | 1.14 | 1 | | BI-1 | CT-3 | 10 | 0.1 | 10 | 1 | 0 | 0 | 0 |
| Example 8 | PC-3 | MIBK | 48.7 | BPAP | 48.7 | - | 0 | PHEP | 2.54 | 0.60 | 3 | | BI-1 | CT-3 | 10 | 0.1 | 10 | 1 | 15 | 0 | 15 |
| Example 9 | PC-4 | BPA | 34.7 | BPC | 58.3 | - | 0 | PHEP | 7.01 | 0.41 | 8 | | BI-1 | CT-3 | 10 | 0.1 | 10 | 1 | 1 | 9 | 10 |
| Example 10 | PC-5 | BPA | 29.6 | BPAF | 69.0 | - | 0 | PHEP | 1.41 | 0.55 | 2 | | BI-1 | CT-3 | 10 | 0.1 | 10 | 1 | 0 | 25 | 25 |
| Example 11 | PC-6 | BPZ | 47.6 | BPF | 47.6 | TPE | 0.5 | PHEP | 4.25 | 0.62 | 5 | | BI-1 | CT-3 | 10 | 0.3 | 10 | 1 | 0 | 5 | 5 |
| Comparative Example 1 | PC-1 | BPZ | 47.9 | BPF | 47.9 | - | 0 | PHEP | 4.25 | 0.65 | 5 | | BI-1 | – | 10 | 0.3 | 0 | 1 | 13 | 25 | 38 |
| Comparative Example 2 | PC-1 | BPZ | 47.9 | BPF | 47.9 | - | 0 | PHEP | 4.25 | 0.65 | 5 | | BI-2 | CT-2 | 10 | 0.6 | 6.8 | 1 | 25 | 25 | 50 |
| Comparative Example 3 | PC-1 | BPZ | 47.9 | BPF | 47.9 | - | 0 | PHEP | 4.25 | 0.65 | 5 | | – | CT-3 | 10 | 0 | 10 | 0 | 15 | 25 | 40 |
| Comparative Example 4 | PC-1 | BPZ | 47.9 | BPF | 47.9 | - | 0 | PHEP | 4.25 | 0.65 | 5 | | BI-2 | CT-3 | 10 | 0.6 | 10 | 1 | 25 | 25 | 50 |
| Comparative Example 5 | PC-3 | MIBK | 48.7 | BPAP | 48.7 | - | 0 | PHEP | 2.54 | 0.60 | 3 | | BI-1 | – | 10 | 0.1 | 0 | 1 | 21 | 25 | 46 |
| Comparative Example 6 | PC-4 | BPA | 34.7 | BPC | 58.3 | - | 0 | PHEP | 7.01 | 0.41 | 8 | | BI-1 | – | 10 | 0.3 | 0 | 1 | 13 | 25 | 38 |
| Comparative Example 7 | PC-5 | BPA | 29.6 | BPAF | 69.0 | - | 0 | PHEP | 1.41 | 0.55 | 2 | | BI-1 | – | 10 | 0.1 | 0 | 1 | 22 | 25 | 47 |
| Comparative Example 8 | PC-7 | BPZ | 49.4 | BPF | 49.4 | - | 0 | PTBP | 1.20 | 0.93 | 0 | | – | CT-3 | 10 | 0 | 10 | 0 | 24 | 18 | 42 |

(*1) BI1 active methylene-based block polyisocyanate (Blonate 1232E)
BI2 phenol block polyisocyanate (Blonate 1901)
(*2) CT1 TPA
CT2 TPD
CT3 stilbene CT-3

As described above, it was demonstrated that the resin composition of the present invention can improve the adhesion between a coating film and a substrate and is useful as a resin composition in which the polycarbonate resin and another resin are blended.

INDUSTRIAL APPLICABILITY

The resin composition of the present invention can be used as a coating resin solution for protecting articles. It is particularly suitable for coatings in fields where durability in daily life is required, such as IC cards and security cards.

## Claims

**1.** A resin composition comprising:

a polycarbonate resin;
an active methylene-based block polyisocyanate; and
an amine-based catalyst,
wherein the polycarbonate resin comprises a terminal structure (A) represented by general formula (1) and a structural unit (B) derived from a monomer represented by general formula (2):

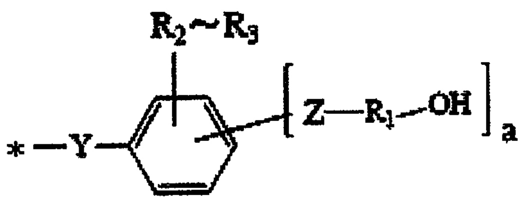

(1)

wherein in formula (1):
$R_1$ represents an alkylene group having 1 to 20 carbon atoms or an alkenylene group having 2 to 20 carbon atoms, each of which may have a substituent;
$R_2$ to $R_3$ each independently represent hydrogen, or an alkyl group having 1 to 20 carbon atoms, an alkoxy group

having 1 to 10 carbon atoms, or an aryl group having 6 to 12 carbon atoms, each of which may have a substituent;
Z represents any one of an ether bond (-O-), a carbonyl group (-C(O)-) and an ester bond (-C(O)O-), or represents a single bond;
a represents an integer of 1 to 3;
Y represents an ether bond or an ester group; and
* represents a bonding site to a polymer main chain,

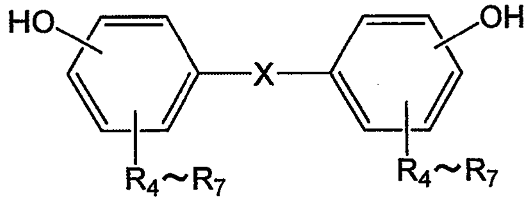

(2)

wherein in formula (2):

$R_4$ to $R_7$ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent; and
X is represented by any one of formulae (3) below:

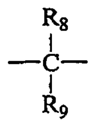 , $-S-$ , $-(CH_2)_c-$ , $-O-$ , $-SO-$ , $-CO-$ , $-SO_2-$ ,

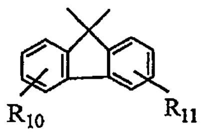 , 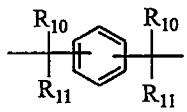 , 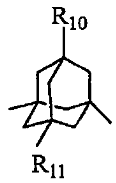 , 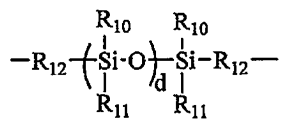

(3)

wherein in formulae (3):

$R_8$ and $R_9$ each independently represent hydrogen, fluorine, chlorine, bromine, or iodine, or an alkyl group having 1 to 20 carbon atoms, an alkoxy group having 1 to 5 carbon atoms, or an aryl group having 6 to 12 carbon atoms, each of which may have a substituent, or
$R_8$ and $R_9$ represent a group in which $R_8$ and $R_9$ bind to each other to form a carbocyclic ring having 5 to 20 carbon atoms or a heterocyclic ring having 5 to 12 chemical elements, each of which may have a substituent;
$R_{10}$ and $R_{11}$ each independently represent hydrogen, fluorine, chlorine, bromine, or iodine, or an alkyl group having 1 to 9 carbon atoms, an alkoxy group having 1 to 5 carbon atoms, an alkenyl group having 2 to 12 carbon atoms, or an aryl group having 6 to 12 carbon atoms, each of which may have a substituent;
each $R_{12}$ independently represents an alkylene group having 1 to 9 carbon atoms, which may have a substituent;
c represents an integer of 0 to 20; and
d represents an integer of 1 to 500.

2. The resin composition according to claim 1, wherein in general formula (1), Z is a single bond, $R_1$ is an alkylene group having 1 to 2 carbon atoms, and $R_2$ and $R_3$ are hydrogen.

3. The resin composition according to claim 1, wherein general formula (1) is represented by formula (1-1) below:

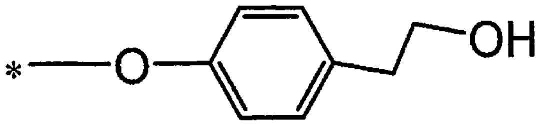

(1-1)

wherein in formula (1-1), * represents the bonding site.

4. The resin composition according to claim 1, wherein the monomer represented by general formula (2) is at least one selected from the group consisting of formula (4) to formula (10) below:

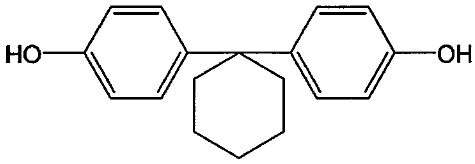

(4)

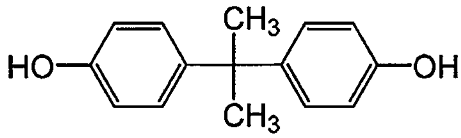

(8)

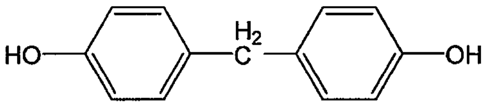

(5)

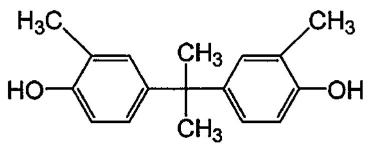

(9)

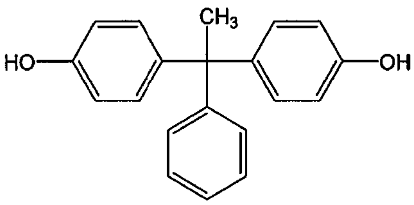

(6)

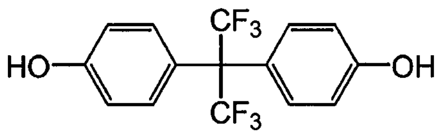

(10)

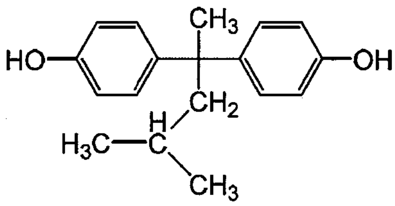

(7)

5. The resin composition according to claim 1, wherein the polycarbonate resin further comprises a structural unit (C) derived from a monomer represented by formula (11) below and derived from a branching agent:

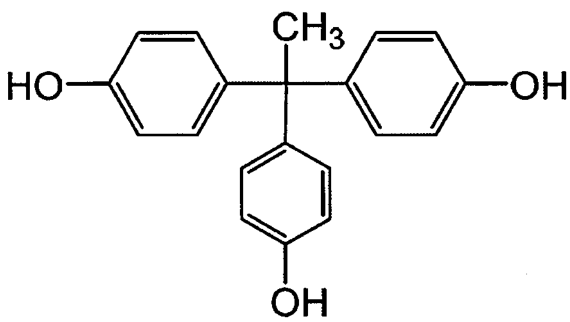

(11)

6. The resin composition according to claim 1, wherein the polycarbonate resin has a hydroxyl value (OH value) of 0.5 to 10 mgKOH/g.

7. The resin composition according to claim 1, wherein the isocyanate (NCO) content in the active methylene-based block polyisocyanate is 4.0 to 12.0% by mass.

**8.** The resin composition according to claim 1, wherein the NCO/OH ratio (mol/mol) calculated from the isocyanate content in the active methylene-based block polyisocyanate and the hydroxyl value of the polycarbonate resin according to formula (I) below is 0.5 to 1.5:

$$\text{NCO/OH ratio (molar ratio)} = \text{NCO (mol)/OH (mol)} = (\text{active methylene-based block polyisocyanate [g]} \times \text{NCO content [\% by mass]}/100)/42\ \text{[g/mol]}\ /\ \text{OH value [mg-KOH/g]} \times \text{polycarbonate resin [g]}/56100\ \text{[mg/mol]} \quad \ldots\ldots\ (I)$$

**9.** The resin composition according to claim 1, wherein the amine-based catalyst is a non-basic amine catalyst.

**10.** The resin composition according to claim 1, wherein the amine-based catalyst has a triphenylamine structure.

**11.** The resin composition according to claim 1, wherein the amine-based catalyst is at least one selected from the group consisting of formula (12) to formula (14) below:

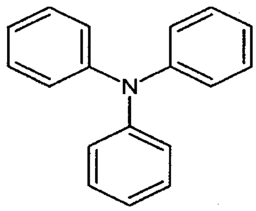

(1 2)

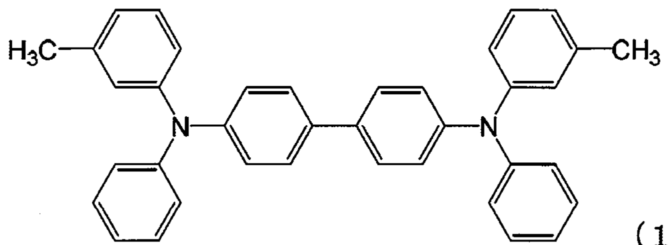

(1 3)

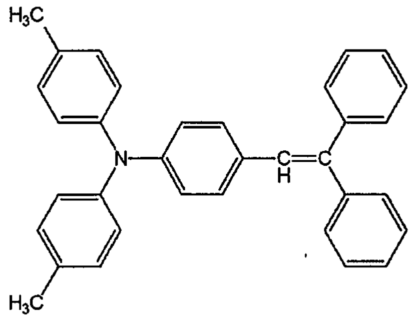

(1 4)

**12.** The resin composition according to claim 1, which comprises 0.05 to 0.5 parts by mass of the active methylene-based block polyisocyanate and 1 to 20 parts by mass of the amine-based catalyst relative to 10 parts by mass of the polycarbonate resin.

**13.** The resin composition according to claim 1, which comprises 10 to 95% by mass of the polycarbonate resin, 0.5 to 5.0% by mass of the active methylene-based block polyisocyanate, and 5.0 to 89.5% by mass of the amine-based catalyst based on the total mass of the resin composition.

**14.** A resin solution comprising:

the resin composition according to any one of claims 1 to 13; and
at least one solvent selected from the group consisting of a halogen-based solvent, an ester-based solvent, an ether-based solvent, a carbonic acid ester-based solvent, and a ketone-based solvent.

**15.** A method for producing a crosslinked coating film, wherein the solvent is removed from the resin solution according to claim 14 and heating is performed at 50 to 150°C.

**16.** The method according to claim 15, wherein the crosslinked coating film is formed on a PVB (polybutyral resin) substrate or a PET (polyethylene terephthalate resin) substrate.

**INTERNATIONAL SEARCH REPORT**

International application No.
**PCT/JP2024/018107**

**A. CLASSIFICATION OF SUBJECT MATTER**

***C08G 18/44***(2006.01)i; ***B32B 27/30***(2006.01)i; ***B32B 27/36***(2006.01)i; ***B32B 27/40***(2006.01)i; ***C08G 18/18***(2006.01)i; ***C08G 18/70***(2006.01)i; ***C08G 64/04***(2006.01)i; ***C09D 175/04***(2006.01)i
FI: C08G18/44; C08G18/18; C08G18/70 030; C08G64/04; C09D175/04; B32B27/40; B32B27/30 Z; B32B27/36

According to International Patent Classification (IPC) or to both national classification and IPC

**B. FIELDS SEARCHED**

Minimum documentation searched (classification system followed by classification symbols)

C08G18/00-18/87; B32B; C08G64/00-64/42; C09D

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2017-52917 A (ASAHI KASEI KABUSHIKI KAISHA) 16 March 2017 (2017-03-16)<br>claims, paragraphs [0023], [0071]-[0073], [0083], [0088]-[0090], examples | 1-8, 12-16<br>9-11 |
| Y | JP 2019-218494 A (MITSUBISHI GAS CHEMICAL COMPANY, INC.) 26 December 2019 (2019-12-26)<br>claims, paragraph [0038] | 1-8, 12-16 |
| Y | WO 2022/186234 A1 (MITSUBISHI GAS CHEMICAL COMPANY, INC.) 09 September 2022 (2022-09-09)<br>claims, paragraph [0035], examples (paragraphs [0079], [0080], table 1) | 1-8, 12-16 |
| Y | JP 2014-80496 A (TEIJIN LIMITED) 08 May 2014 (2014-05-08)<br>claims, paragraph [0036] | 5 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018107**

| Patent document cited in search report | Publication date (day/month/year) | Patent family member(s) | Publication date (day/month/year) |
|---|---|---|---|
| JP 2017-52917 A | 16 March 2017 | US 2018/0282574 A1<br>claims, paragraphs [0055], [0167]-[0169], [0179], [0184]-[0186], examples<br>CN 107922584 A<br>KR 10-2018-0034560 A | |
| JP 2019-218494 A | 26 December 2019 | (Family: none) | |
| WO 2022/186234 A1 | 09 September 2022 | EP 4303248 A1<br>claims, paragraph [0055], examples (paragraphs [0142], [0143], table 1)<br>CN 116888215 A<br>KR 10-2023-0151978 A | |
| JP 2014-80496 A | 08 May 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H041992268365 A
- JP 2014024789 A
- JP 6340811 B